Europäisches Patentamt

European Patent Office

Office européen des brevets

(19)

(11) Publication number:  0 044 334
B1

# EUROPEAN PATENT SPECIFICATION

(45) Date of publication of patent specification: 28.08.85

(51) Int. Cl.⁴: **G 01 B 7/315, B 61 K 9/12**

(21) Application number: **81900407.8**

(22) Date of filing: **29.01.81**

(86) International application number:
**PCT/SE81/00024**

(87) International publication number:
**WO 81/02198 06.08.81 Gazette 81/19**

(54) A METHOD OF DETECTING CHANGES IN THE RELATIVE ANGULAR POSITION BETWEEN THE STEEL TYRES ON RESPECTIVE WHEELS OF A RAILWAY VEHICLE WHEEL PAIR.

(30) Priority: **01.02.80 SE 8000841**

(43) Date of publication of application:
**27.01.82 Bulletin 82/04**

(45) Publication of the grant of the patent:
**28.08.85 Bulletin 85/35**

(84) Designated Contracting States:
**AT CH DE FR GB LI**

(56) References cited:
**DE-A-2 643 286**
**SE-B- 390 567**
**US-A-3 170 323**

(73) Proprietor: **CONORT ENGINEERING AB**
**Box 4112**
**S-171 04 Solna (SE)**

(72) Inventor: **WALLANDER, Olof**
**Torbjörn Klockares Gata 18A**
**S-113 30 Stockholm (SE)**
Inventor: **KÄHR, Gunnar Nils-Erik**
**Buntmarkarvägen 68**
**S-141 41 Huddinge (SE)**

(74) Representative: **Svanfeldt, Hans-Ake et al**
**DR. LUDWIG BRANN PATENTBYRA AB**
**Kungsgatan 3 Box 7524**
**S-103 92 Stockholm (SE)**

Courier Press, Leamington Spa, England.

# Description

## Technical Field

In general the invention relates to a method of detecting changes in the relative angular position between the steel tyres on respective wheels of a rail vehicle wheel pair which pair comprises two wheels, one fixed at each end of a shaft.

## Technical Problem

In the operation of railways and in particular in passenger wagons which usually have to travel a long distance annually the wheels are normally provided with shrunk-on tyres consisting of steel. This technique permits renovation of worn-out wheels whereby important savings can be made. However, in this connection the problem is encountered that due to faulty shrink-on connections, over-heating and other factors the tyre may start to creep in relation to the hub portion of the wheel which in the long run may cause the tyre to get loose with ensuring risk of injuries of passengers and serious break-downs.

## State of the Art

US—A—3 170 323 relates to an apparatus for detecting the twist or torsion of a rotating shaft. In said US patent there is no recognition of the technical problem solved in accordance with the present invention.

At present there is simply no methods for checking the quality of the connection upon manufacture. During operation the connections are checked by a person passing along the train and manually knocking with a hammer against the wheels to compare acoustically and only with the aid of the ear the sound from respectively the hub portion and the tyre. Due to in particular the ever-increasing wages and the uncertainty of the testing method described, this technique to an increasing extent has been abandoned leaving the tyre loosening problem still unsolved.

## Invention

The invention as claimed in claim 1 attempts to solve the above-indicated problem.

## Description of the Drawing

In the attached drawing

FIGURE 1 is a schematic view of a wheel pair in connection with the magnetising process,

FIGURE 2 schematically shows the same wheel pair at a sensing station, and

FIGURE 3 shows a rail vehicle wheel in elevation magnetised in accordance with the invention.

## Best Embodiment

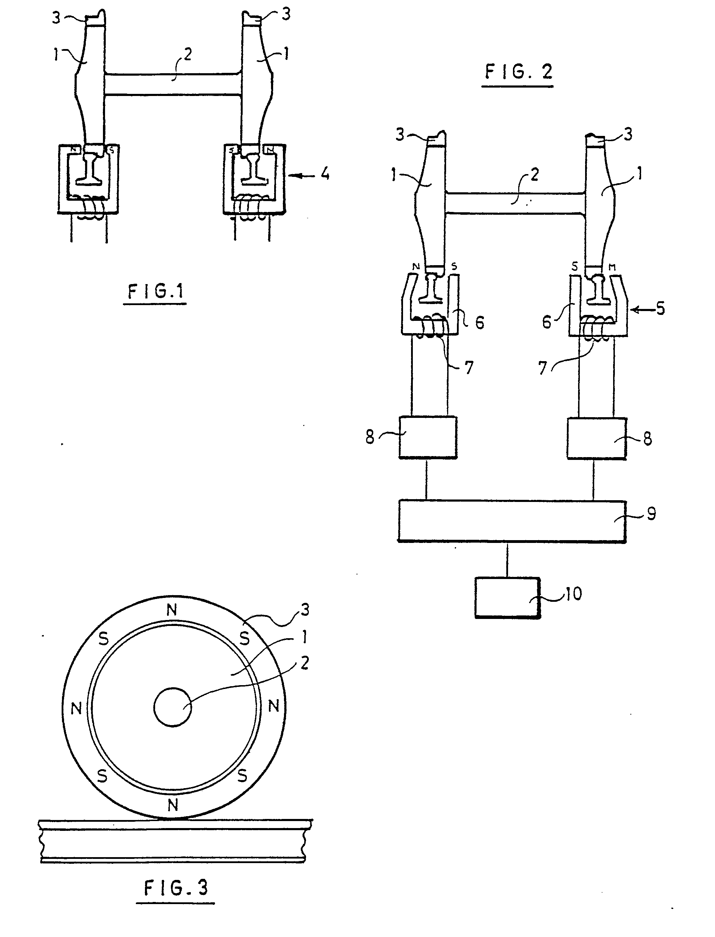

Fig. 1 shows how a hub portion 1 is rigidly connected to a wheel shaft 2. On the outer circumference of the hub portion 1 a tyre 3 is shrunk-on. Due to the fact that the wheel shaft 2 and the wheel hubs 1 are rigidly connected as far as rotation is concerned, the wheel shaft 2 will participate in the rotational movement of the wheels.

A magnetic pattern is applied to the tyre, this being performed in a magnetising station 4 schematically shown in Figure 1. When the wheel pairs of the rail vehicle pass through the magnetising station 4 the tyres 3 will be magnetised in such a way that a given magnetic "pattern" is obtained.

Another way of applying a pattern is to apply pieces of permanently magnetic material in one or more depressions in the lateral surfaces of the tyres.

In Fig. 3 there is illustrated a magnetic pattern having poles at eight points evenly distributed around the periphery and with alternating field direction. Even if such a pattern at present has been chosen for illustration purposes, the expert will appreciate that different number of poles and different magnetic pattern may be present within the scope of the invention.

Fig. 2 illustrates a sensing station provided somewhere along the railway line. During passage past the sensing station, generally designated as 5, sensors 6 sense the magnetic patterns of the individual tyres 3. A signal is generated and transferred to an amplifying and signal forming unit 8. The output signals from these amplifying and signal forming units are transferred to a comparator 9 and a signal is emitted from this comparator 9 to an output unit 10.

For handling and comparing the signals modern integrated micro-processor technique is used and units of the Hall-element type, coils and the like can be used as sensors.

During comparison in the sensing station 5 the sensors 6 read the remanent magnetic field of the tyres and in the comparator 9 the pattern positions of the tyres are compared to indicate any angular discrepancy therebetween. As all parts of the shaft unit are rigidly connected with each other the magnetic pattern on the two tyres normally has a certain given positional relationship to each other.

The magnetic pattern applied to the tyres at the magnetising station will be preserved in the tyres during several years, whereafter the magnetising procedure may be repeated if necessary.

The system is not sensitive to the operational environment. This fact as well as the fact that the magnetic marking can be applied at a low cost and can be rotated if necessary means that the invention offers an economically attractive way of detecting changes in the relative angular position between the steel tyres on respective wheels of a railway vehicle wheel pair.

## Claims

1. A method of detecting changes in the relative angular position between the steel tyres on respective wheels of a rail vehicle wheel pair which pair comprises two wheels, one fixed at each end of a shaft, characterized by magnetising each said tyre (3) or attaching permanently magnetised members at different positions around said tyre, so as to provide a magnetic pattern on said tyre (3), sensing the magnetic pattern on each said tyre by means of respective sensors (6, 7), supplying sensor signals to a comparator (9) which compares said signal representing the magnetic patterns of the two tyres (3) so as to determine the angular positional relationship between the two tyres (3).

2. The method as claimed in claim 1, characterized in that the magnetisation forms the magnetic pattern of permanent magnetic fields in each tyre (3), said fields being spaced at positions around the circumference of the wheel in such a way that fields at any two adjacent positions are of opposite direction.

3. A method in accordance with claim 2, characterized in that the number of permanent magnetic fields is eight.

4. The method in accordance with claim 1, characterized in that sensing is by inductive type sensors.

5. The method in accordance with claim 4, characterized in that sensing is by Hall-effect devices.

## Revendications

1. Procédé de détection des changements de la position angulaire relative entre les bandages en acier sur les roues respectives d'une paire de roues de véhicule sur rails, cette paire comprenant deux roues fixées chacune à chaque extrémité d'un essieu, caractérisé en ce qu'il consiste à aimanter chaque bandage (3) ou à fixer des éléments à aimantation permanente en différents points autour du bandage, de façon à créer une configuration magnétique sur ce bandage (3), à détecter la configuration magnétique sur chaque bandage au moyen de capteurs respectifs (6, 7), à envoyer les signaux des capteurs à une comparateur (9) qui compare les signaux représentant les configurations magnétiques des deux bandages (3) de façon à déterminer la position angulaire relative entre les deux bandages (3).

2. Procédé suivant la revendication 1, caractérisé en ce que l'aimantation engendre la configuration magnétique de champs magnétiques permanents dans chaque bandage (3), ces champs étant espacés à des positions autour de la circonférence de la roue de façon à ce que les champs à deux positions adjacentes quelconques soient de sens opposé.

3. Procédé suivant la revendication 2, caractérisé en ce que les champs magnétiques permanents sont au nombre de huit.

4. Procédé suivant la revendication 1, caractérisé en ce que la détection est effectuée par des capteurs de type inductif.

5. Procédé suivant la revendication 4, caractérisé en ce que la détection est effectuée par des dispositifs à effet Hall.

## Patentansprüche

1. Ein Verfahren zum Erkennen von Änderungen der relativen Winkelposition zwischen den Stahllaufringen an den Rädern eines Schienfahrzeugradpaares, wobei das Radpaar zwei an den Enden einer Achse befestigte Rädar aufweist, dadurch gekennzeichnet, daß jeder Laufring (3) magnetisiert wird oder ein permanent magnetisches Teil an unterschiedliche Stellen des Laufringes angebracht wird, so daß der Laufring (3) mit einem magnetischen Muster Versehen ist und das magnetische Muster jedes Laufringes mittels Sensoren (6, 7) abgetastet wird und die Signale an einen Komparator (9) übertragen werden, welcher die Signale vergleicht und die die magnetischen Muster der beiden Laufringe (3) darstellen, um die relative Winkelbeziehung zwischen den beiden Laufringen (3) zu bestimmen.

2. Verfahren nach Anspruch 1, dadurch gekennzeichnet, daß die Magnetisierung das magnetische Muster der permanent magnetischen Felder in jedem Laufring (3) bildet, wobei die Felder über den Umfang des Rades verteilt so angeordnet sind, daß benachbarte Felder entgegengesetzt ausgerichtet sind.

3. Verfahren nach Anspruch 2, dadurch gekennzeichnet, daß acht permanent magnetische Felder vorgesehen sind.

4. Verfahren nach Anspruch 1, dadurch gekennzeichnet, daß die Sensoren induktive Sensoren sind.

5. Verfahren nach Anspruch 4, dadurch gekennzeichnet, daß die Sensoren Hall-Effektsensoren sind.

FIG. 2

FIG.1

FIG.3